# EUROPEAN PATENT APPLICATION

(11) **EP 2 988 134 A1**
(43) Date of publication of application: **24.02.2016**
(21) Application number: 14181782.5
(22) Date of filing: 21.08.2014
(51) Int. Cl.: G01N 35/04, B01L 9/06

(54) **Sample container carrier for a laboratory sample distribution system, laboratory sample distribution system and laboratory automation system**

(71) Applicant: Roche Diagnostics GmbH, 68305 Mannheim (DE); F. Hoffmann-La Roche AG, 4070 Basel (CH)
(72) Inventor: Edelmann, Matthias, 69469 Weinheim (DE)
(74) Representative: Patentanwälte Ruff, Wilhelm, Beier, Dauster & Partner mbB

(57) **Abstract**

The invention relates to a sample container carrier, a laboratory sample distribution system comprising such a sample container carrier, and to a laboratory automation system comprising such a laboratory sample distribution system. The sample container carrier has means to tilt a sample container in order to allow higher acceleration rates.

## Description

### Applicable field and prior art

The invention relates to a sample container carrier for a laboratory sample distribution system. The invention relates further to a laboratory sample distribution system containing such a sample container carrier, and to a laboratory automation system containing such a laboratory sample distribution system.

A sample container carrier for a laboratory sample distribution system is typically adapted to move on a transport plane of the laboratory sample distribution system. It comprises holding means for a sample container being adapted to support the sample container.

Sample containers are typically made of transparent plastic material or glass material and usually have the form of a tube having an opening at the top side. Such sample containers can be used in order to hold medical samples such as blood samples.

A laboratory sample distribution system comprising such sample container carriers can be used in order to transport sample containers between laboratory stations. Such laboratory stations can be used in order to analyze the samples contained in the sample containers and can, for example, be incorporated as pre-analytical, analytical and/or post-analytical stations. A laboratory sample distribution system significantly increases sample throughput through a laboratory automation system comprising such laboratory stations and can provide for a secure autonomous operation of the laboratory automation system. An example for a laboratory sample distribution system can be found in WO 2011/138448 A1.

Throughput of such a laboratory sample distribution system is related with a maximum speed of the sample container carriers that can be achieved on the transport plane, and with maximum acceleration and deceleration of the sample container carriers in order to obtain an operating speed or to slow down. However, high acceleration values can lead to spilling over of a sample contained in a sample container, or to tilting over of the complete sample container together with the contained sample. This can lead to significant delays in operation and to contamination of the transport plane, which can harm the reliability of measurements performed by the laboratory stations.

### Object and solution

It is thus an object of the present invention to provide for a sample container carrier for a laboratory sample distribution system that allows for higher acceleration and deceleration values. It is a further object of the invention to provide for a laboratory sample distribution system comprising such a sample container carrier. It is also an object of the present invention to provide for a laboratory automation system comprising such a laboratory sample distribution system.

This is solved by a sample container carrier according to claim 1, a laboratory sample distribution system according to claim 9, a laboratory sample distribution system according to claim 10 and a laboratory automation system according to claim 11.

The invention relates to a sample container carrier for a laboratory sample distribution system. The sample container carrier is adapted to move on a transport plane of the laboratory sample distribution system. The sample container carrier comprises holding means for a sample container being adapted to support, hold and/or fix the sample container.

The holding means comprise an acceleration compensation means. The acceleration compensation means are adapted to tilt or rotate the sample container comprised in the holding means in a direction of acceleration of the sample container carrier.

By means of the inventive sample container carrier, it is possible to tilt or rotate the sample container such that spilling over of a contained sample is less likely or prevented. This is due to the fact that the tilting of the sample container comprised in the holding means in a direction of acceleration of the sample container carrier resembles a typical behavior of a sample contained in the sample container during acceleration. In other words, the sample container is tilted such that spilling of the sample is reduced or prevented.

It should be noted that deceleration is treated as a negative acceleration. The principles disclosed herein are equally applicable for positive acceleration and for negative acceleration.

It should further be noted that the word "tilting" is to be understood such that it relates to the top portion of a sample container. For example, if the sample container carrier accelerates positively in a certain direction, the top portion of the sample container, for example an opening of the sample container, is tilted such that this top portion is moved further in this direction with respect to the sample container carrier.

According to an embodiment, the acceleration compensation means are adapted to tilt the sample container comprised in the holding means in the direction of acceleration of the sample container carrier such that an upper part of the sample container is tilted in the direction of acceleration. This corresponds to the just described functionality.

According to an embodiment, the acceleration compensation means comprise an inertia element. Such an inertia element can, for example, be implemented as a massive element being engineered out of a metal or another substance having a relatively high specific weight. The inertia element can sense acceleration for example by means of its relative movement to the rest of the sample container carrier. It can be used in order to control tilting of the sample container carrier.

According to an embodiment, the inertia element is made of a material having a higher density than other or remaining materials of the sample container carrier. This provides for an effective sensing of the acceleration of the sample container carrier.

According to an embodiment, the inertia element is adapted to accelerate delayed in time with respect to the rest of the sample container carrier. The inertia element may be adapted to cause that the sample container comprised in the holding means is tilted in the direction of acceleration of the sample container carrier. Such an embodiment provides for an effective tilting of the sample container without the need for active or electronic components.

According to an embodiment, the inertia element comprises a recess being adapted to support the sample container. This allows for a direct support of the sample container by the inertia element and for a simple embodiment having only a few movable parts.

According to an embodiment, the holding means comprise an elastomeric material at least partially radially surrounding the inertia element. This allows for a damped movement of the inertia element relative to the rest of the sample container carrier, for example relative to a plane on which the inertia element is adapted to move. If the sample container carrier accelerates, the inertia element moves relative to the rest of the sample container carrier while deforming the elastomeric material and thus automatically tilts the sample container.

It should be noted that embodiments in which a sample container is directly comprised in or supported by the inertia element can be embodied such that the sample container is laterally supported by lateral supporting means above the inertia element. Such lateral supporting means can, for example, be implemented such that they laterally support the sample container at a position in the upper half of the sample container. When the inertia element as described and the lateral holding means interact, they provide for a tilting of the sample container as intended.

According to an embodiment, the holding means comprise a supporting element having a recess to support the sample container. The supporting element may be swivel-mounted in the sample container carrier, and the inertia element is located below the supporting element and fixedly connected with the supporting element. This embodiment can be regarded as an alternative to embodiments in which the sample container is directly held by in the inertia element. It provides also for an effective embodiment of tilting the sample container.

The invention relates further to a laboratory sample distribution system. The laboratory sample distribution system comprises a number of inventive sample container carriers. Each sample container carrier may additionally comprise a magnetically active device, e.g. in form of a permanent magnet.

The laboratory sample distribution system further comprises a transport plane, being adapted to support the sample container carriers. It also comprises a number of electro-magnetic actuators, being stationary arranged below the transport plane. The electro-magnetic actuators are adapted to move respective sample container carriers on top of the transport plane by applying a magnetic force to the sample container carriers.

The laboratory sample distribution system further comprises a control device, which is configured to control the movement of the sample container carriers on top of the transport plane by driving the electro-magnetic actuators such that the sample container carriers move along corresponding transport paths.

By means of the laboratory sample distribution system according to the invention, the advantages discussed above with respect to the sample container carriers can be used for a laboratory sample distribution system. Especially, use of inventive sample container carriers allows for a faster operation of the laboratory sample distribution system, because higher acceleration values can be achieved. Regarding the inventive sample container carrier, all variants and embodiments discussed above can be applied.

The invention further relates to a laboratory sample distribution system comprising a number of inventive sample container carriers and a transport plane being adapted to support the sample container carriers. The laboratory sample distribution system according to this embodiment is embodied such that each sample container carrier further comprises drive means adapted to self-propel the sample container carrier for movement on the transport plane, independent from drive means eventually comprises under the transport plane. The laboratory sample distribution system further comprises a control device, being configured to control the movement of the sample container carriers on top of the transport plane by instructing the drive means such that the sample container carriers move along corresponding transport paths.

By means of this embodiment, the inventive sample container carrier can be used for a laboratory sample distribution system in which sample container carriers are implemented such that they drive autonomously.

The invention further relates to a laboratory automation system, comprising a number of pre-analytical, analytical and/or post-analytical (laboratory) stations, and a laboratory sample distribution system according to one of the embodiments as described above adapted to distribute the sample container carriers and/or sample containers between the stations. The stations may be arranged adjacent to the laboratory sample distribution system.

Pre-analytical stations may be adapted to perform any kind of pre-processing of samples, sample containers and/or sample container carriers.

Analytical stations may be adapted to use a sample or part of the sample and a reagent to generate a measuring signal, the measuring signal indicating if and in which concentration, if any, an analyte exists.

Post-analytical stations may be adapted to perform any kind of post-processing of samples, sample containers and/or sample container carriers.

The pre-analytical, analytical and/or post-analytical stations may comprise at least one of a decapping station, a recapping station, an aliquot station, a centrifugation station, an archiving station, a pipetting station, a sorting station, a tube type identification station, a sample quality determining station, an add-on buffer station, a liquid level detection station, and a sealing/desealing station.

### Brief description of the drawings

The invention will be described in detail with respect to the drawings schematically depicting embodiments of the invention. In detail:
- Fig. 1: shows a sample container carrier according to a first embodiment,
- Fig. 2: shows a part of a sample container carrier according to a further embodiment holding a tilted sample container,
- Fig. 3: shows a laboratory automation system.

### Detailed description of embodiments

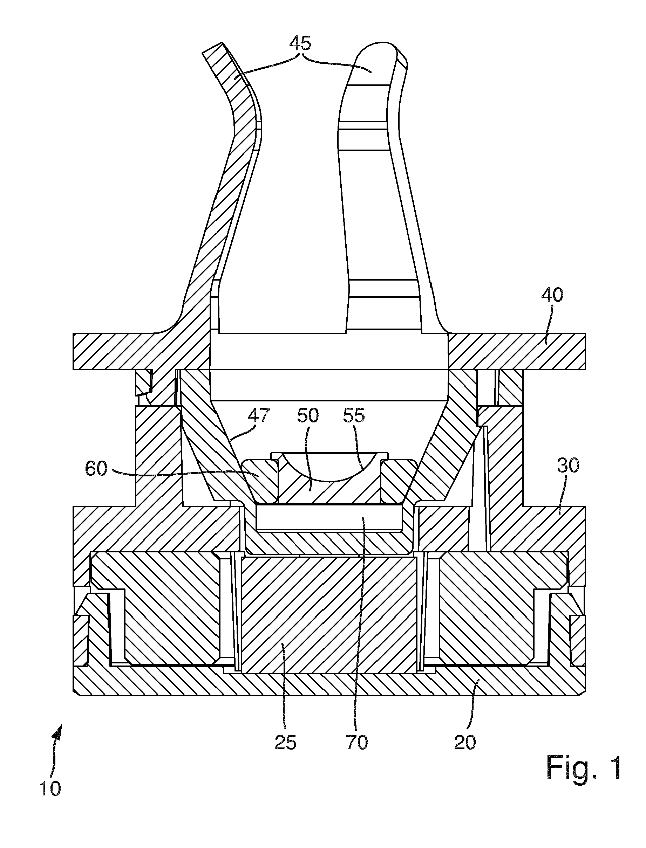

Fig. 1 shows an embodiment of a sample container carrier 10. The sample container carrier 10 comprises a bottom plate 20 on which the sample container carrier 10 slides over a transport plane of a laboratory sample distribution system. Above the bottom plate 20, a magnetically active element in the form of a permanent magnet 25 is arranged.

Above the permanent magnet 25, a middle element 30 of the sample container carrier 10 is arranged.

Above the middle element 30, a top element 40 is arranged. The top element 40 comprises three springs 45, wherein only two of the three springs 45 are depicted in fig. 1. The springs 45 are adapted to laterally engage a sample container such that it is held in the sample container carrier 10, but can still be tilted.

The top element 40 further comprises a cone-shaped recess 47. The cone-shaped recess 47 is arranged below the springs 45 and comprises a plate-shaped element 70 at its lower portion. The plate-shaped element 70 has an upper surface.

In the recess 47, which may be cone-shaped, rotation-symmetric, etc., an inertia element 50 is arranged. The inertia element 50 comprises a recess 55 adapted to support a sample container. The inertia element 50 is arranged inside a resilient member 60 made of elastomeric material. The inertia element 50 is supported on the surface provided by the plate-shaped element 70 and is adapted to move horizontally on this surface.

The springs 45, the inertia element 50 and the resilient member 60 are members of holding means or form the holding means, the holding means being adapted to hold a corresponding sample container.

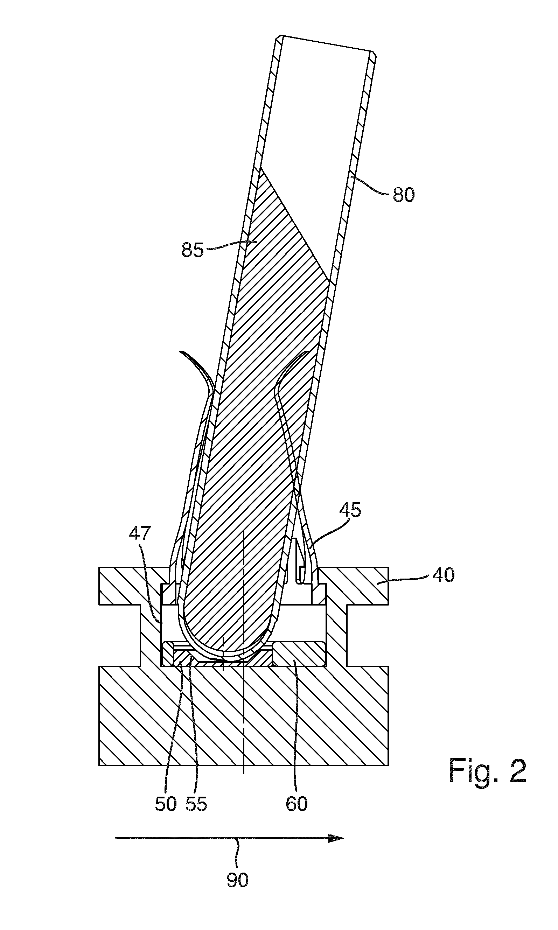

When a sample container is comprised in the sample container carrier 10, it is held at its lower portion by the recess 55 of the inertia element 50, and is held at its upper portion by the springs 45. When the sample container carrier 10 accelerates, the inertia element 50 moves in a direction opposite to the direction of acceleration relative to the remaining parts of the sample container carrier 10 due to the inertia force against a force generated by the resilient member 60, thus tilting the sample container. The inertia element 50 and the resilient member 60 can thus be regarded as acceleration compensation means. The underlying principle is the same as explained in the following with respect to fig. 2.

Fig. 2 shows an alternative embodiment of an upper element 40. The upper element 40 is part of a sample container carrier, wherein other parts of the sample container carrier are not shown except for the parts described in the following.

The upper element 40 comprises three springs 45, two of which are shown in fig. 2. The springs 45 are adapted to laterally support a sample container 80 contained in the sample container carrier.

The upper element 40 comprises a recess 47, which is cylindrically shaped. In the recess 47, an inertia element 50 is arranged having a recess 55 being surrounded by a resilient member 60. The functionality of the inertia element 50 and the resilient member 60 is identical to the functionality as described with respect to fig. 1.

A tube-shaped sample container 80 is contained in the sample container carrier shown in fig. 2. With its lower end, the sample container 80 is contained in the recess 55 of the inertia element 50. At its upper portion, the sample container 80 is laterally supported by the springs 45. When the sample container carrier accelerates in a direction shown with an arrow 90, the inertia element 50 moves opposite to this direction 90 with respect to the remaining parts of the sample container carrier. This leads to a tilting of the sample container 80 as shown.

A sample 85 is contained in the sample container 80. The sample 85 has an inclined surface which is caused by the acceleration along the direction 90. As shown, a distance between the sample 85 and the upper end of the sample container 80 is larger at the top of the inclined surface than it would be if the sample container 80 would not be tilted. Thus, the inventive sample container carrier provides for a reduced likelihood of spilling over of the sample 85 and allows for higher acceleration values.

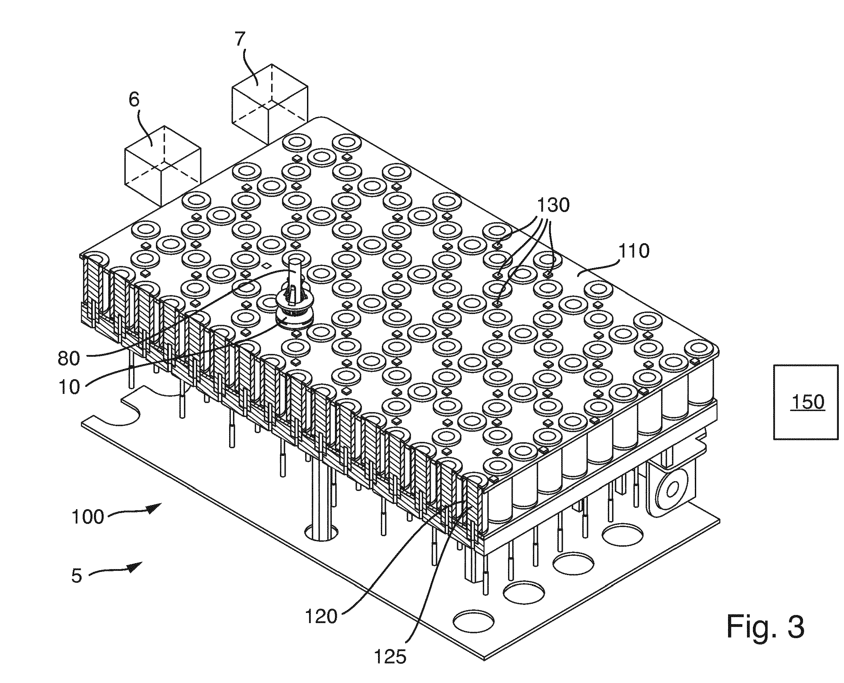

Fig. 3 shows a laboratory automation system 5. The laboratory automation system 5 comprises a laboratory sample distribution system 100. It further comprises a first laboratory station 6 and a second laboratory station 7. The laboratory stations 6, 7 are used in order to analyze samples contained in sample containers (80).

The laboratory sample distribution system 100 comprises a transport plane 110, under which a number of electro-magnetic actuators 120 in the form of magnetic coils are arranged. Each electro-magnetic actuator 120 has a ferromagnetic core 125. A number of Hall-sensors 130 is distributed over the transport plane 110. On the transport plane 110, a sample container carrier 10 according to fig. 1 is positioned. The sample container carrier 10 carries a sample container 80. It is to be understood that the sample container carrier 10 is only shown as an example, and that typically a laboratory sample distribution system 100 comprises a plurality of sample container carriers 10.

The laboratory sample distribution system 100 further comprises a control unit 150 that is adapted to control the electro-magnetic actuators 120 such that the sample container carrier 10 moves over the transport plane 110 by electro-magnetic force. The control unit 150 can apply an acceleration to the sample container carrier 10 that is higher compared with usage of conventional sample container carriers because the sample container carrier 10 has the tilting functionality described above.

## Claims

1. Sample container carrier (10) for a laboratory sample distribution system (100),
- wherein the sample container carrier (10) is adapted to move on a transport plane (110) of the laboratory sample distribution system (100),
- wherein the sample container carrier (10) comprises:
- holding means for a sample container (80), wherein the holding means are adapted to hold the sample container,
- wherein the holding means comprise an acceleration compensation means (50, 60), wherein the acceleration compensation means (50, 60) are adapted to tilt the sample container (80) held by the holding means (50) in a direction of acceleration of the sample container carrier (10).

2. Sample container carrier (10) according to claim 1,
**characterized in that**
- the acceleration compensation means (50, 60) are adapted to tilt the sample container (80) held by the holding means in the direction (90) of acceleration of the sample container carrier (10) such that an upper part of the sample container (80) is tilted in the direction (90) of acceleration.

3. Sample container carrier (10) according to claim 1 or 2,
**characterized in that**
- the acceleration compensation means (50, 60) comprise an inertia element (50).

4. Sample container carrier (10) according to claim 3,
**characterized in that**
- the inertia element (50) is made of a material having a higher density than other materials of the sample container carrier (10).

5. Sample container carrier (10) according to claim 3 or 4,
**characterized in that**
- the inertia element (50) comprises a recess (55) being adapted to support the sample container (80).

6. Sample container carrier (10) according to one of claims 3 to 5,
**characterized in that**
- the holding means comprise an elastomeric material (60) at least partially radially surrounding the inertia element (50).

7. Sample container carrier (10) according to claim 6, **characterized in that**
- the elastomeric material (60) is formed as an elastomeric ring surrounding the inertia element (50).

8. Sample container carrier (10) according to claim 3 or 4, **characterized in that**
- the holding means comprise a supporting element having a recess to support the sample container,
- wherein the supporting element is swivel-mounted in the sample container carrier (10), and
- wherein the inertia element is located below the supporting element and fixedly connected to the supporting element.

9. Laboratory sample distribution system (100), comprising:
- a number of sample container carriers (10) according to one of the preceding claims, wherein each sample container carrier (10) comprises a magnetically active device (25),
- a transport plane (110), being adapted to support the sample container carriers (10),
- a number of electro-magnetic actuators (120), being stationary arranged below the transport plane (110), the electro-magnetic actuators (120) being adapted to move respective sample container carriers (10) on top of the transport plane (110) by applying a magnetic force to the sample container carriers (10), and
- a control device (150), being configured to control the movement of the sample container carriers (10) on top of the transport plane (110) by driving the electro-magnetic actuators (120) such that the sample container carriers (10) move along corresponding transport paths.

10. Laboratory sample distribution system (100), comprising:
- a number of sample container carriers (10) according to one of the claims 1 to 8,
- a transport plane (110), being adapted to support the sample container carriers (10),
- wherein each sample container carrier (10) further comprises drive means adapted to propel the sample container carrier (10) for movement on the transport plane (110), and
- a control device (150), being configured to control the movement of the sample container carriers (10) on top of the transport plane (110) by controlling the drive means such that the sample container carriers (10) move along corresponding transport paths.

11. Laboratory automation system (5), comprising:
- a number of laboratory stations (6, 7), preferably pre-analytical, analytical and/or a post-analytical stations, and
- a laboratory sample distribution system (100) according to claim 9 or 10 adapted to distribute sample container carriers (10) and/or sample containers (80) between the laboratory stations (6, 7).
